# EUROPEAN PATENT APPLICATION

(11) **EP 4 589 035 A1**
(43) Date of publication of application: **23.07.2025**
(21) Application number: 24152866.0
(22) Date of filing: 19.01.2024
(51) Int. Cl.: C22B 3/24, B01J 47/022, C22B 26/12, B01D 15/10, B01D 15/22, G01N 30/60

(54) **CONTAINER WITH A MIXING CHAMBER FOR EXTRACTING LITHIUM OR LITHIUM SALTS FROM A BRINE**

(71) Applicant: Vulcan Energie Ressourcen GmbH, 76227 Karlsruhe (DE)
(72) Inventor: Pirson, Claude, 1457 Walhain (BE); Aicher, Thomas, 79102 Freiburg (DE); Brand, Stefan, 69493 Hirschberg (DE); Ruoff, Patrick, 76227 Karlsruhe (DE); Rudszuck, Thomas, 75053 Gondelsheim (DE)
(74) Representative: Durm Patentanwälte PartG mbB

(57) **Abstract**

The present invention relates to a container (10) for extracting lithium or lithium salts from a brine with a brine inlet port (20) for receiving the brine arranged at a first portion of the container (10); a multiple-use port (30) arranged at a second portion of the container (10); a sorbent bed volume (40) for holding a sorbent material, arranged between the brine inlet port (20) and the multiple-use port (30); and a mixing chamber (50) arranged inside the container (10) between the brine inlet port (20) and the sorbent bed volume (40), for mixing the brine before entering the sorbent bed volume (40). The present invention further relates to a process for extracting lithium or lithium salts from the brine and to a process for extracting lithium or lithium salts from a loaded sorbent material and to a process for cleaning the container (10).

## Description

The present invention relates to a container for extracting lithium or lithium salts from a brine. The present invention further relates to a process for extracting lithium or lithium salts from a brine, a process for extracting lithium or lithium salts from a loaded sorbent material and a process for cleaning a container.

Several brine sources exist naturally. For instance, brine sources include brine deposits like the Salar de Atacama in Chile, Silver Peak Nevada, Salar de Uyuni in Bolivia, or the Salar de Hombre Muerte in Argentina. Other common brine sources are geothermal, oilfield, Smackover, and relict hydrothermal brines. Processes for commercially exploiting these types of geothermal brines are described in US 9,644,126 B2.

Geothermal brines are of particular interest for a variety of reasons. First, geothermal brines provide a source of power due to the fact that hot geothermal pools are stored at high pressure underground, which, when released to atmospheric pressure, can provide a flash-steam. The flash-steam can be used, for example, to run a power plant. Additionally, geothermal brines contain useful elements, which can be recovered and utilized for secondary processes. In some geothermal waters and brines, binary processes can be used to heat a second fluid to provide steam for the generation of electricity without the flashing of the geothermal brine.

Geothermal brines, in particular untreated brines, originating in the Upper Rhine Valley region typically exit a borehole at around 165°C, while geothermal brines originating in the Salton Sea area exit the borehole at around 350°C. Herein, geothermal brines exiting the borehole at more than 255°C are called high-energy brines and are sometimes referred to as Salton Sea or Salton Sea derived brines, while geothermal brines exiting the borehole at or below 255°C are called low-energy brines and are sometimes referred to as Upper Rhine Valley brines, or Upper Rhine Valley derived brines. The methods previously disclosed for the treatment and lithium extraction of high-energy brines, such as those found in the Salton Sea regions, are often not suitable for processing low-energy brines because of the differences in the mineral compositions resulting at least in part from the differences in temperature of the raw brines at the borehole. Because of the lower exit temperature, the low-energy brines do not have the high amounts of iron, manganese and zinc that allow for the precipitation of silica components during the operation known as steam flashing. In the case of the low-energy brines, reducing the pressure of the raw brine either does not cause steam to flash off, or a reduced amount of steam is flashed off, and the dissolved solids in many cases tend to remain in solution, or are only partially precipitated.

One problem associated with extracting lithium from geothermal brines is that known processes have narrow tolerances with respect to the fluids, i.e. the brine used in the process, and are producing a large amount of waste when switching from one fluid to another. Known processes are therefore not flexible and often require a costly and complex pre-treatment of the brines and are often time consuming.

Thus, novel approaches are needed to allow for an improved processing, especially of low-energy brines, and an improved extraction of valuable minerals such as lithium. In particular, it is desired to provide a simpler, cheaper and faster approach. Furthermore, it is desired to allow for higher tolerances with respect to the fluids employed in the process and efficiently enable switching from one fluid to another. Moreover, it is preferred to minimize the amount of waste produced while maintaining the possibility to reinject a depleted geothermal brine into a geothermal reservoir after the lithium extraction.

In view of the above, the invention is defined by the subject matter with the features of the independent claims.

A first aspect of the invention relates to a container for extracting lithium or lithium salts from a brine, preferably in a direct lithium extraction process, comprising:
- a brine inlet port for receiving the brine arranged at a first portion of the container;
- a multiple-use port arranged at a second portion of the container;
- a sorbent bed volume for holding a sorbent material, arranged between the brine inlet port and the multiple-use port; and
- a mixing chamber arranged inside the container between the brine inlet port and the sorbent bed volume, for mixing the brine before entering the sorbent bed volume.

A second aspect of the invention relates to a process for extracting lithium or lithium salts from a brine, comprising steps of:
- providing a container with a mixing chamber, a sorbent bed volume and a sorbent material in the sorbent bed volume;
- transferring the brine to the mixing chamber;
- mixing the brine in the mixing chamber;
- transferring the brine from the mixing chamber to the sorbent material; and
- loading lithium or lithium salts from the brine to the sorbent material for obtaining a loaded sorbent material.

A third aspect of the invention relates to a process for extracting lithium or lithium salts from a loaded sorbent material, comprising steps of:
- providing a container according to the first aspect of the invention and a loaded sorbent material in the sorbent bed volume;
- transferring an eluent fluid to the loaded sorbent material;
- extracting lithium or lithium salts from the loaded sorbent material to the eluent fluid for yielding a lithium enriched eluate; and
- removing the lithium enriched eluate from the container.

A fourth aspect of the invention relates to a process for cleaning a container, comprising steps of:
- providing a container according to the invention with a backwashing outlet;
- transferring a backwashing fluid to the sorbent bed volume through the multiple-use port; and
- removing the backwashing fluid from the container through the backwashing outlet.

Preferred embodiments of the invention are defined in the dependent claims. It shall be understood that the claimed processes have similar and/or identical preferred embodiments with each other and as the claimed container, in particular as defined in the dependent claims and as disclosed herein.

The present invention is in particular based on the idea of providing the mixing chamber as an integral part of the container. This is particularly advantageous when switching from one fluid to another or when providing a plurality of different fluids to the mixing chamber. The fluids are preferably mixed efficiently with a performance close to an ideal mixing in a continuous stirred-tank reactor. Favourably, segregating the brine from the lithium enriched eluate is enhanced, thereby reducing the volume of mixed fluid phases, which are formed while switching from one fluid to the other, i.e. when switching from the brine to the eluent fluid, thereby reducing costs and leading to a faster process. This renders the process and the container particularly efficient when switching from loading the sorbent material in the sorbent bed volume with lithium or lithium salts from the brine to extracting lithium or lithium salts from the loaded sorbent material with the eluent fluid. Additionally, the mixing chamber beneficially provides a uniform flow pattern in the sorbent bed volume, resulting in optimal loading and elution behaviour thereby further increasing efficiency.

In comparison to previous approaches for extracting lithium or lithium salts from a brine, the approach of the present invention allows a more efficient and faster processing of low-energy brines at reduced costs. Additionally, it becomes possible to efficiently extract lithium or lithium salts at low environmental impact. The amount of energy consumption and waste is reduced for example because the amount of mixed fluid phases is reduced.

The container is preferably a pressure vessel. The brine is preferably a geothermal brine, more preferably a low-energy geothermal brine. The brine is preferably received from a geothermal power plant.

The term lithium particularly comprises lithium species, such as for example lithium cations, which may be for example dissolved in an aqueous phase or adsorbed to the sorbent material. The term lithium salts particularly comprises lithium chloride, preferably dissolved in the aqueous solution, but alternatively also solid lithium chloride and other combinations of lithium cations with anions.

The term fluid comprises in particular the brine and/or the backwashing fluid and/or the depleted brine and/or the lithium enriched eluate and/or mixed fluid phases and/or the eluent fluid. Preferably the fluid is an aqueous solution.

The brine inlet port is preferably configured as an opening in the first portion and allows the brine to enter the container. In particular the brine inlet port is configured for transferring the brine and/or the eluent fluid to the mixing chamber.

The multiple-use port is preferably configured as an opening in the second portion and allows fluids to enter the container and to exit the container. The sorbent bed volume may comprise internal structures for holding the sorbent material, such as for example baskets with a plurality of holes. The sorbent material preferably comprises a plurality of sorbent granules and/or sorbent beads. Preferably, the sorbent material in the sorbent bed volume has a bed porosity of 0.35 to 0.40. In particular, the sorbent material is a lithium-aluminate-based sorbent such as VULSORB^{®}. When loaded into the sorbent bed volume, the sorbent material inside the sorbent bed volume preferably forms a cone shape heap, wherein the angle of the cone is a parameter for sizing the sorbent bed volume and is preferably in dependence upon the angle of repose of the sorbent material and a humidity of the sorbent material. The sharper the sorbent beads and/or the sorbent granules, the steeper the angle of the cone. Alternatively, the sorbent material is mixed with a fluid to from a sorbent slurry before loading into the sorbent bed volume. In this case the sorbent slurry does not form a pronounced cone shaped heap.

The mixing chamber may include internal structures for creating turbulence and enhance mixing the fluids. The internal structures of the mixing chamber are preferably baffles and/or impingement plates. Preferably, the mixing chamber is as small in relation to the sorbent bed volume and/or an overall volume of the container.

The loaded sorbent material beneficially comprises lithium or lithium salts, which are adsorbed thereto. Preferably the extraction of lithium or lithium salts from the loaded sorbent material is achieved by switching the fluid in the container from the brine to the eluent fluid. The eluent fluid may be water or a diluted lithium chloride solution, which preferably enters the container through the brine inlet port and exits the container through the multiple-use port.

The cleaning of the container preferably removes fines and debris from the sorbent bed volume and/or from the sorbent material. Particularly, the cleaning is achieved by passing brine and/or depleted brine and/or any other fluid in up flow direction through the container, entering the container through the multiple-use port in the second portion of the container and exiting the container through the back washing outlet in the first portion of the container.

The lithium enriched eluate preferably forms the basis for extracting lithium or lithium salts in optional subsequent crystallization steps. The lithium enriched eluate optionally undergoes further purification steps, which lead to a higher concentration of lithium species and/or a higher purity, meaning a lower amount of non-lithium impurities in the lithium enriched eluate, such as foreign ions. Preferably the brine is held in contact with the sorbent material for a contact time of several minutes to maximize the lithium or lithium salt adsorption to the sorbent material.

In a preferred embodiment the container is shaped as a column. Preferably a ratio of a height of the column and a diameter of the column is from 0.5 to 5.0, more preferably from 0.8 to 5.0, most preferably from 0.9 to 1.5. This shape advantageously allows for a favourable flow behaviour of the fluids through the container.

In a preferred embodiment a ratio of a volume of the mixing chamber and the sorbent bed volume is from 0.500 to 0.005, preferably from 0.100 to 0.010, more preferably from 0.100 to 0.020, most preferably 0.080. Advantageously, minimizing the volume of the mixing chamber in relation to the sorbent bed volume allows for faster processing and higher extraction efficiencies while maintaining optimized mixing behaviour. Preferably, the mixing chamber comprises fillers for reducing the volume of the mixing chamber and at the same time for creating a uniform flow distribution over the entire cross section of the mixing chamber. The fillers may comprise elements of concrete and/or polymers and/or ceramic materials, preferably inert ceramic materials.

In a preferred embodiment the container comprises a first flow distributor. The first flow distributor is favourably arranged at an end of the brine inlet facing towards the mixing chamber and preferably the first flow distributor is arranged inside the mixing chamber. In particular, the first flow distributor is configured for distributing the brine after passing through the brine inlet port. The first flow distributor preferably comprises a plate with a plurality of holes and/or a mesh and/or a tube widening towards the mixing chamber and/or a tube with a plurality of holes and/or a plurality of slots or a plurality of such tubes. The holes and/or slots are preferably designed such, that a uniform outlet flow through the holes and/or the slots, optionally across the entire length of the tube, is achieved. The tube or the plurality tubes can be arranged in form of a spiral or a star. The first flow distributer is configured to distribute the brine and/or the eluent fluid in the mixing chamber. Advantageously, the first flow distributor leads to an optimized plug flow of the fluids passing therethrough before entering the mixing chamber, thereby enhancing mixing in the mixing chamber. The container preferably comprises a plurality of brine inlet ports, which are more preferably each equipped with first flow distributors.

In a preferred embodiment the container comprises a freeboard volume, which may be arranged between the mixing chamber and the sorbent bed volume. A ratio of the freeboard volume and the sorbent bed volume preferably is from 0.50 to 0.10, more preferably from 0.40 to 0.15, more preferably from 0.33 to 0.20, most preferably 0.30 or 0.25. Alternatively, the freeboard volume may be an integral part of the sorbent bed volume. Favourably, a plug flow of the fluid is achieved in the freeboard volume. A uniform flow distribution minimizes back mixing of the fluids in the freeboard volume, thereby minimizing the volume of the mixed fluid phase which otherwise may form when switching from one fluid to the another as explained previously. During operation of the container for extracting lithium or lithium salts, the freeboard volume is preferably filled with fluid and therefore, not a free space.

In a preferred embodiment the container comprises a separator arranged between the mixing chamber and the sorbent bed volume and/or between the mixing chamber and the freeboard volume. The separator preferably comprises a membrane and/or a mesh and/or a perforated metal plate. The membrane may be a filter cloth or a filter membrane. The membrane preferably has a pore size of 100 µm and above. The membrane may be consisting of a polymer material or a metal material. The mesh preferably has a mesh size from 50 µm to 200 µm, more preferably 100 µm. The mesh may be consisting of a polymer material, stainless steel, or alloy steel. Favourably the separator constraints the back mixing of the fluids from the sorbent bed volume or the freeboard volume to the fluids inside the mixing chamber. Advantageously, the separator creates a uniform flow of fluids exiting the mixing chamber into the sorbent bed volume or the freeboard volume.

In a preferred embodiment the multiple-use port is configured as an inlet for a backwashing fluid and/or as an outlet for a depleted brine and/or as an outlet for a lithium enriched eluate. Beneficially, this multifunctionality is cost efficient and saves space, for enabling two or more fluids both to enter and exit the container. The multiple-use port preferably allows operating the container in a reverse flow mode for backwashing and cleaning the container.

In a preferred embodiment the container comprises a second flow distributor arranged inside the sorbent bed volume. The second flow distributor is preferably configured for collecting and/or distributing the depleted brine and/or the lithium enriched eluate after passing through the sorbent bed volume and before passing through the multiple-use port and/or for distributing the backwashing fluid after passing through the multiple-use port. The second flow distributor is preferably configured for distributing the backwashing fluid before entering the sorbent bed volume. The second flow distributor preferably comprises a tube with a plurality of holes and/or a plurality of slots. In particular, the size of the holes and/or the slots is smaller than the average size of the sorbent granules and/or sorbent beads and preferably about half of the average size of the sorbent granules and/or sorbent beads. The diameter of the holes may be from 5 mm to 10 mm, preferably 8 mm. The slots may be circumferential slots and/or axial slots, preferably with a width of 200 µm or less. In a particularly preferred embodiment, the second flow distributor comprises at least two tubes, preferably four tubes, wherein one tube comprises a plurality of holes and is arranged inside the other tube which comprises a plurality of slots. Alternatively, or additionally, the second flow distributor may comprise a plurality of parallel tubes, which may further be perforated similarly to the first flow distributor. Beneficially, the holes allow for high flow velocity over the entire horizontal cross section of the sorbent bed. An advantageous effect of the slots is to avoid loss of sorbent granules and/or sorbent beads. The second flow distributor in particular consists of a polymer material or a steel, alloy. A flow velocity through the second flow distributor is preferably from 0.04 m/s to 0.10 m/s, more preferably 0.06 m/s. Advantageously, the second flow distributor retains the sorbent material in the sorbent bed volume and beneficially enables a uniform flow velocity of the fluids throughout the entire cross section of the container and especially the sorbent bed volume. The first flow distributor may be constructed in the same way as the second flow distributor, besides the fact that the first flow distributor is not arranged inside the sorbent bed volume and not connected to the multiple-use port.

In a preferred embodiment the container comprises a backwashing outlet, which is preferably connected to the freeboard volume. The backwashing outlet is preferably configured for bypassing the mixing chamber. The backwashing outlet is favourably configured for receiving the backwashing fluid. The backwashing outlet may be located on a centre line of the container, especially of the first portion. It is also preferred that the container comprises a plurality of backwashing outlets. Advantageously, the separator between the mixing chamber and the sorbent bed volume or between the mixing chamber and the freeboard volume includes an opening below the spot, where the backwashing outlet is located. The separator may include a plurality of openings, each arranged at a spot where corresponding backwashing outlets are located above. Preferably, the distance between the opening in the separator and the backwashing outlet is minimal for bypassing the mixing chamber and optionally bypassing the freeboard volume. The backwashing outlet may be a tube. Beneficially, the brine inlet port and the backwashing outlet are arranged above the separator inside the mixing chamber and thereby do not influence on the plug flow through the sorbent bed and optimize the mixing behaviour.

In a preferred embodiment the container comprises a drain outlet, which is arranged at an end of the second portion of the container, for draining the whole volume of the container. This beneficially allows to drain all fluids completely and remove the sorbent material, if needed. The container preferably comprises a sorbent material loading port, arranged in the first portion and/or manholes and/or sight glasses and/or online analytics. The online analytics are preferably installed at the brine inlet port and/or at the multiple-use port and/or at the backwashing outlet and/or at the drain outlet and/or at a shell of the container. The online analytics are in particular configured to measure a composition of the fluids entering or exiting the container or at certain locations across the container height. The online analytics advantageously determine cut points, optionally during merry-go-round operation, and/or monitor the performance to the sorbent material and the quality of flow distribution in the container, thereby advantageously providing information about when backwashing and/or maintenance of the container e.g. maintenance of the mixing chamber is required.

In a preferred embodiment a heat exchanger, which is preferably configured for adjusting the temperature of the fluid, e.g. the brine, in the container, is comprised. In particular, the heat exchanger is configured for adjusting the temperature of the fluid to a temperature from 20 °C to 90 °C, preferably from 50 °C to 80 °C. Advantageously, the heat exchanger allows for a homogeneous and reproducible temperature, which is particularly important for controlling the solubility of salts and other dissolved species in order to avoid undesired precipitation of solids in the container, thereby minimizing maintenance costs and increasing performance. Additionally, controlling the temperature allows to optimize the temperature parameter for the direct lithium extraction process, resulting in a more efficient process and leading to increased yields.

In a preferred embodiment the lithium enriched eluate comprises more than 600 mg/L but less than 2000 mg/L lithium, more than 50 mg/L but less than 1200 mg/L sodium, more than 10 mg/L but less than 200 mg/L potassium, less than 200 mg/L magnesium, more than 100 mg/L but less than 600 g/L calcium, more than 5 mg/L but less than 40 mg/L strontium, less than 10 mg/L boron, iron, manganese, and zinc, less than20 mg/L silica, more than 90 mg/L sulfate, less than 10 g/L total dissolved solids, and having an oxidation reduction potential of less than 0.

In a preferred embodiment a pressure in the container is from 1 bar to 40 bar, preferably from 15 bar to 30 bar, more preferably from 16 bar to 28 bar and/or a flowrate through the container is from 1 m³ per hour to 500 m³ per hour, preferably from 200 m³ per hour to 350 m³ per hour, more preferably from 280 m³ per hour to 300 m³ per hour, most preferably 293 m³ per hour. Pressurizing the brine in the container in the aforementioned range or ranges advantageously increases the efficiency of the lithium extraction, for example leading to a more homogenous flow through the sorbent material. The selection of a flow rate in the aforementioned range allows for a particularly efficient lithium extraction, considering both yields and throughput.

In a preferred embodiment, process comprises providing a container according to the first aspect of the invention and preferably conducting all process steps therein. Preferably, the steps of the process take place concurrently. The process may comprise providing the sorbent material in the sorbent bed volume. Preferably the process comprises passing the brine through the first flow distributor before entering the mixing chamber. In a preferred embodiment, the process comprises passing the brine and/or the eluent fluid through the freeboard volume before entering the sorbent bed volume, preferably after exiting the mixing chamber and optionally after passing through the separator. In a preferred embodiment, the process comprises mixing the eluent fluid in the mixing chamber, in particular before transferring the eluent fluid to the loaded sorbent material. In a preferred embodiment, the process comprises passing the backwashing fluid through the second flow distributor before entering the sorbent bed volume and optionally through the freeboard volume afterwards. In a preferred embodiment, the process comprises removing the backwashing fluid from the container through the backwashing outlet, preferably without passing through the mixing chamber.

A preferred embodiment comprises a process for operating a container, preferably a container according to the first aspect of the invention, comprising steps of firstly conducting the process according to the second aspect of the invention, subsequently conducting the process according to the third aspect of the invention and subsequently conducting the process according to the fourth aspect of the invention.

These and other aspects of the invention will be apparent from and elucidated with reference to the embodiment(s) described hereinafter. In the following drawings
- Figure 1: shows a schematic illustration of a container according to the present invention; and
- Figure 2: shows a graph, schematic illustrating the mixing behaviour of two fluids in the container according to the invention.

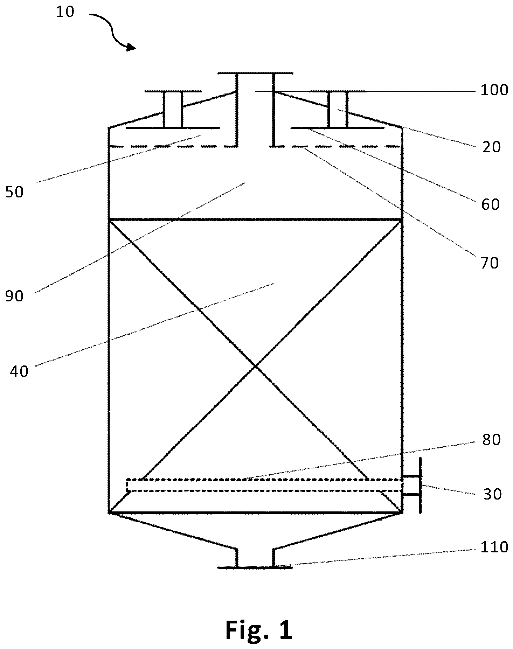

In Fig. 1 a container 10 for extracting lithium or lithium salts from a brine in a direct lithium extraction process is schematically shown. The container 10 comprises a brine inlet port 20 for receiving the brine. The brine inlet port 20 is arranged at a first portion of the container 10, which is a top portion. The container 10 further comprises a multiple-use port 30, arranged at a second portion of the container 10, which is a bottom portion of the container 10. The multiple-use port 30 is configured as an inlet for a backwashing fluid and/or as an outlet for a depleted brine and/or as an outlet for a lithium enriched eluate.

A sorbent bed volume 40 for holding a sorbent material, is arranged between the brine inlet port 20 and the multiple-use port 30. A mixing chamber 50 is arranged inside the container 10 between the brine inlet port 20 and the sorbent bed volume 40. The mixing chamber 50 is configured for mixing the brine before entering the sorbent bed volume 40.

A first flow distributor 60 is arranged inside the mixing chamber 50 at an end of the brine inlet port 20, facing towards the mixing chamber 50. The first flow distributor 60 is configured for distributing the brine after passing through the brine inlet port 20.

A separator 70 is arranged between the mixing chamber 50 and the sorbent bed volume 40, as indicated by a dashed line in Figure 1. The separator 70 consists of a perforated metal plate. A second flow distributor 80 is arranged inside the sorbent bed volume 40. The second flow distributor 80 is configured for collecting and/or distributing the depleted brine and/or the lithium enriched eluate after passing through the sorbent bed volume 40 and before passing through the multiple-use port 30 and/or for distributing the backwashing fluid after passing through the multiple-use port 30 and before entering the sorbent bed volume 40. The second flow distributor 80 comprises two tubes, or preferably four tubes, wherein one tube with a plurality of holes is arranged inside the other tube, which has a plurality of slots. In particular, each tube is made of an inner perforated tube and an outer slotted tube. A freeboard volume 90 is arranged between the mixing chamber 50 and the sorbent bed volume 40. A backwashing outlet 100 is connected to the freeboard volume 90. The backwashing outlet 100 is configured for bypassing the mixing chamber 50.

The container 10 comprises a drain outlet 110, which is arranged at an end of the second portion of the container 10, for draining the whole volume of the container 10. The drain outlet 110 allows to drain all fluids completely and remove the sorbent material, if needed.

During extracting lithium or lithium salts from the brine the sorbent material is provided in the sorbent bed volume 40. The brine is firstly transferred through the brine inlet port 20 and the first flow distributor 60 to the mixing chamber 50, through the separator 70, and from there to the freeboard volume 90, in particular in a plug flow, which is advantageously created through the separator 70 between mixing chamber and freeboard. The brine is mixed in the mixing chamber 50. Afterwards, the brine is transferred from the freeboard volume 90 to the sorbent material in a plug flow. The sorbent material is loaded with lithium or lithium salts from the brine for obtaining a loaded sorbent material. The liquid exiting the sorbent material afterwards is referred to as a depleted brine. The depleted brine exits the container 10 through the second flow distributor 80 and the multiple-use port 30.

For extracting lithium or lithium salts from the loaded sorbent material, an eluent fluid is transferred to the loaded sorbent material via the brine inlet port 20, the first flow distributor 60, the mixing chamber 50, through the separator 70, and the freeboard volume 90. Inside the sorbent material, lithium or lithium salts are extracted from the loaded sorbent material to the eluent fluid for yielding a lithium enriched eluate. The lithium enriched eluate is removed from the container 10 through the second flow distributor 80 and the multiple-use port 30. The eluent fluid thus follows the same path through the container 10 as the brine.

For cleaning the container 10, a backwashing fluid is transferred to the sorbent bed volume 40 through the multiple-use port 30 and the second flow distributor 80. The backwashing fluid is removed from the container 10 through the backwashing outlet 100, thereby bypassing the mixing chamber 50. During this cleaning procedure, the backwashing liquid is directed in an opposite direction through the container 10 compared to the flow direction of the brine.

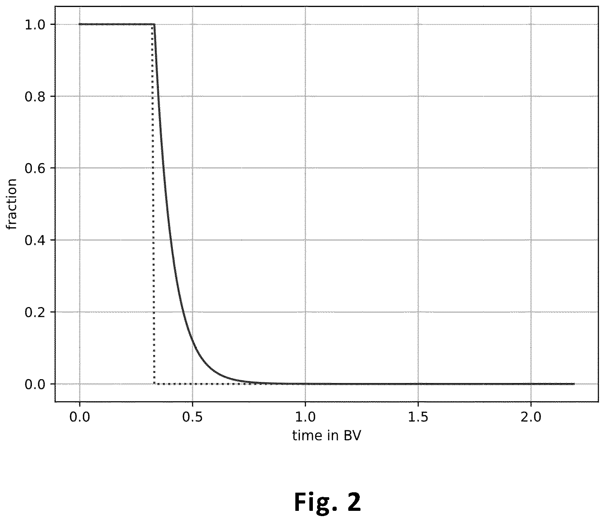

Fig. 2 shows a graph which schematically illustrates the mixing effectiveness of the container of the present invention. The abscissa represents the time in sorbent bed volumes (BV). The ordinate represents the fraction of an analyte such as lithium measured at the brine inlet port 20 by online analytics. The dotted line represents an idealized step response to a step change in the fraction of the lithium in an ideal plug flow. The solid line represents the concentration profile for the container 10 according to the present invention with a mixing chamber 50 at the top portion of the container 10, wherein a ratio of a volume of the mixing chamber 50 and the sorbent bed volume 40 is 0.08 and a ratio of the freeboard volume 90 and the sorbent bed volume 40 is 0.33 allowing for ideal plug flow conditions. From the graph of Fig. 2 it can be retrieved that the performance of the container 10 with the aforementioned ratios is close to ideal mixing and/or plug flow performance.

It is to be understood that the illustration represents an example. The skilled person can implement the different illustrated features and/or steps in corresponding containers, units or devices for carrying out the processes. The skilled person may thereby also choose different arrangements or subset of the illustrated steps and/or features.

The foregoing discussion discloses and describes merely exemplary embodiments of the present disclosure. As will be understood by those skilled in the art, the present disclosure may be embodied in other specific forms without departing from the spirit or essential characteristics thereof. Accordingly, the description is intended to be illustrative, but not limiting the scope of the disclosure, as well as other claims. The disclosure, including any readily discernible variants of the teachings herein, defines, in part, the scope of the foregoing claim terminology such that no inventive subject-matter is dedicated to the public.

In the claims, the word "comprising" does not exclude other elements or steps, and the indefinite article "a" or "an" does not exclude a plurality. A single element or unit or step may fulfil the functions of several items or steps recited in the claims. The mere fact that certain measures are recited in mutually different dependent claims does not indicate that a combination of these measures cannot be used to advantage.

## Claims

1. Container (10) for extracting lithium or lithium salts from a brine, preferably in a direct lithium extraction process, comprising:
a brine inlet port (20) for receiving the brine arranged at a first portion of the container (10);
a multiple-use port (30) arranged at a second portion of the container (10);
a sorbent bed volume (40) for holding a sorbent material, arranged between the brine inlet port (20) and the multiple-use port (30); and
a mixing chamber (50) arranged inside the container (10) between the brine inlet port (20) and the sorbent bed volume (40), for mixing the brine before entering the sorbent bed volume (40).

2. The container (10) according to the previous claim, wherein
the container (10) is shaped as a column; and
a ratio of a height of the column and a diameter of the column is from 0.5 to 5.0, preferably from 0.8 to 5.0, most preferably from 0.9 to 1.5.

3. The container (10) according to any previous claim, wherein
a ratio of a volume of the mixing chamber (50) and the sorbent bed volume (40) is from 0.500 to 0.005, preferably from 0.100 to 0.010, more preferably from 0.100 to 0.020, most preferably 0.080.

4. The container (10) according to any previous claim, comprising
a first flow distributor (60) arranged at an end of the brine inlet port (20) facing towards the mixing chamber (50) and preferably inside the mixing chamber (50), wherein
the first flow distributor (60) is preferably configured for distributing the brine after passing through the brine inlet port (20); and
the first flow distributor (60) preferably comprises a plate with a plurality of holes and/or a mesh and/or a tube widening towards the mixing chamber (50) and/or a tube with a plurality of holes and/or a plurality of slots.

5. The container (10) according to any previous claim, comprising
a freeboard volume (90) arranged between the mixing chamber (50) and the sorbent bed volume (40), wherein
a ratio of the freeboard volume (90) and the sorbent bed volume (40) is from 0.50 to 0.10, preferably from 0.40 to 0.15, more preferably from 0.33 to 0.20, most preferably0.30 or 0.25.

6. The container (10) according to any previous claim, comprising
a separator (70) arranged between the mixing chamber (50) and the sorbent bed volume (40) and/or preferably arranged between the mixing chamber (50) and the freeboard volume (80), wherein
the separator (70) preferably comprises a membrane and/or a mesh and/or a perforated metal plate.

7. The container (10) according to any previous claim, wherein
the multiple-use port (30) is configured as an inlet for a backwashing fluid and/or as an outlet for a depleted brine and/or as an outlet for a lithium enriched eluate.

8. The container (10) according to any previous claim, comprising
a second flow distributor (80) arranged inside the sorbent bed volume (40), wherein
the second flow distributor (80) is preferably configured for collecting and/or distributing the depleted brine and/or the lithium enriched eluate after passing through the sorbent bed volume (40) and before passing through the multiple-use port (30) and/or for distributing the backwashing fluid after passing through the multiple-use port (30) and before entering the sorbent bed volume (40); and
the second flow distributor (80) preferably comprises a tube with a plurality of holes and/or a plurality of slots.

9. The container (10) according to claim 5, comprising
a backwashing outlet (100), which is preferably connected to the freeboard volume (90), wherein
the backwashing outlet (100) is preferably configured for bypassing the mixing chamber (50).

10. Process for extracting lithium or lithium salts from a brine, comprising steps of:
providing a container (10) with a mixing chamber (50), a sorbent bed volume (40) and a sorbent material in the sorbent bed volume (40);
transferring the brine to the mixing chamber (50);
mixing the brine in the mixing chamber (50);
transferring the brine from the mixing chamber (50) to the sorbent material; and
loading lithium or lithium salts from the brine to the sorbent material for obtaining a loaded sorbent material.

11. The process according to claim 10, comprising steps of:
providing a container (10) according to claim 4 and a sorbent material in the sorbent bed volume (40); and
passing the brine through the first flow distributor (60) before entering the mixing chamber (50).

12. The process according to claim 10, comprising steps of:
providing a container (10) according to claim 8 and a sorbent material in the sorbent bed volume (40); and
passing the brine through the freeboard volume (90) before entering the sorbent bed volume (40).

13. Process for extracting lithium or lithium salts from a loaded sorbent material, comprising steps of:
providing a container (10) according to any one of claims 1 to 9 and a loaded sorbent material in the sorbent bed volume (40);
transferring an eluent fluid to the loaded sorbent material;
extracting lithium or lithium salts from the loaded sorbent material to the eluent fluid for yielding a lithium enriched eluate; and
removing the lithium enriched eluate from the container (10).

14. Process for cleaning a container (10), comprising steps of:
providing a container (10) according to claim 9;
transferring a backwashing fluid to the sorbent bed volume (40) through the multiple-use port (30);
removing the backwashing fluid from the container (10) through the backwashing outlet (100).

15. The process according to claim 14, comprising steps of:
passing the backwashing fluid through the second flow distributor (80) before entering the sorbent bed volume (40).
